# DEMANDE DE BREVET EUROPEEN

(11) **EP 4 741 948 A1**
(43) Date de publication de la demande: **13.05.2026**
(21) Numéro de dépôt: 24212511.0
(22) Date de dépôt: 12.11.2024
(51) Int. Cl.: G04B 19/12, A44C 5/00, G04B 19/28, G04B 29/02, G04B 37/22, G04B 45/00

(54) **COMPOSANT HORLOGER LÉGER ET ROBUSTE**

(71) Demandeur: ROLEX SA, 1211 Genève 26 (CH)
(72) Inventeur: CALAME, Florian, 1066 Epalinges (CH); DEFFAUGT, Guillaume, 74100 Vétraz-Monthoux (FR); RIOTTE, Thibaut, 74370 Annecy (FR)
(74) Mandataire: Moinas & Savoye SARL

(57) **Abrégé**

Procédé de fabrication d'un composant horloger, caractérisé en ce qu'il comprend les étapes suivantes :
- Fabrication d'un squelette ébauché (10a) comprenant des ouvertures débouchantes (11) ;
- Fabrication d'au moins deux inserts ébauchés (20b) ;
- Formation d'un ensemble préassemblé (30b) par insertion à moindre jeu de chaque insert ébauché (20b) dans une ouverture débouchante (11) du squelette ébauché (10a) ;
- Moulage de l'ensemble préassemblé (30b) au sein d'un moule (201), entraînant le soudage de chaque insert ébauché (20b) avec au moins un autre insert ébauché (20b), de sorte à former une structure imbriquée et indissociable avec le squelette (10) ;
- Usinage de finition permettant d'atteindre les dimensions et terminaisons finales du composant horloger.

## Description

La présente invention concerne un procédé de fabrication d'un composant horloger, notamment un composant horloger d'habillage, comme une carrure, voire plus généralement tout autre composant. Elle porte aussi sur un composant horloger en tant que tel, comme une carrure, et sur une pièce d'horlogerie, notamment une montre bracelet, comprenant au moins un tel composant horloger.

Un composant horloger, et plus particulièrement un composant horloger d'habillage, doit atteindre de nombreuses propriétés mécaniques, parfois antinomiques. Parmi ces propriétés recherchées, nous pouvons mentionner :
- La légèreté, qui permet de rendre le port d'une pièce d'horlogerie confortable ;
- Une apparence très attrayante, exempte de défaut, compatible avec les exigences esthétiques de l'horlogerie de luxe ;
- La robustesse, pour résister aux contraintes extérieures subies par une pièce d'horlogerie, de sorte que le composant horloger conserve une même apparence de manière pérenne, et plus généralement l'ensemble de ses propriétés mécaniques de manière pérenne.

En pratique, les solutions existantes correspondent à des compromis entre ces propriétés. En général, les composants horlogers sont ainsi réalisés de manière massive à partir d'un matériau pouvant être à la fois léger et dur. Ces solutions existantes présentent toutefois des limites, et il existe un besoin d'identifier des nouvelles solutions qui permettent d'optimiser les propriétés et/ou l'aspect des composants horlogers.

Un objet de la présente invention est donc de proposer une solution pour obtenir un composant horloger, en particulier un composant horloger d'habillage, léger et robuste, de manière améliorée par rapport à l'état de la technique.

A cet effet, l'invention repose sur un procédé de fabrication d'un composant horloger, caractérisé en ce qu'il comprend les étapes suivantes :
- Fabrication d'un squelette ébauché comprenant des ouvertures débouchantes ;
- Fabrication d'au moins deux inserts ébauchés ;
- Formation d'un ensemble préassemblé par insertion à moindre jeu de chaque insert ébauché dans une ouverture débouchante du squelette ébauché ;
- Moulage de l'ensemble préassemblé au sein d'un moule, entraînant le soudage de chaque insert ébauché avec au moins un autre insert ébauché, de sorte à former une structure imbriquée et indissociable avec le squelette ;
- Usinage de finition permettant d'atteindre les dimensions et terminaisons finales du composant horloger.

L'invention est plus précisément définie par les revendications.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente une vue de dessous d'un squelette d'une carrure selon un mode de réalisation de l'invention.
La figure 2 représente une vue en coupe par un plan vertical transversal déplié AA du squelette de la carrure selon le mode de réalisation de l'invention.
La figure 3 représente une vue de dessus du squelette de la carrure selon le mode de réalisation de l'invention.
La figure 4 représente une vue éclatée en coupe par un plan vertical transversal déplié AA d'un ensemble préassemblé selon le mode de réalisation de l'invention.
La figure 5 représente une vue de dessous de l'ensemble préassemblé selon le mode de réalisation de l'invention.
La figure 6 représente une vue de dessus de l'ensemble préassemblé selon le mode de réalisation de l'invention.
La figure 7 représente une vue en coupe par un plan vertical transversal déplié AA de l'ensemble préassemblé selon le mode de réalisation de l'invention.
La figure 8 représente une vue en coupe par un plan vertical transversal déplié AA d'un dispositif de moulage de l'ensemble préassemblé lors d'une étape de moulage selon le mode de réalisation de l'invention.
La figure 9 représente l'évolution respectivement de la température T en °C et de la charge C en kN lors de l'étape de moulage du procédé de fabrication selon le mode de réalisation de l'invention.
La figure 10 représente une vue en coupe par un plan vertical transversal déplié AA d'une ébauche de carrure issue de l'étape de moulage selon le mode de réalisation de l'invention.
La figure 11 représente une vue en demi-coupe de la carrure selon le mode de réalisation de l'invention.
La figure 12 représente une vue en demi-coupe d'une boîte de montre comprenant la carrure selon le mode de réalisation de l'invention.

L'invention porte sur un procédé de fabrication d'un composant horloger, notamment d'habillage, en particulier qui peut se positionner sur le pourtour d'une pièce d'horlogerie ou constituer le pourtour d'une pièce d'horlogerie, comme une carrure. Un tel composant horloger comprend ainsi une première partie orientée vers l'intérieur de la pièce d'horlogerie, notamment vers le volume comprenant le mouvement horloger, que nous appellerons enceinte, et une deuxième partie orientée vers l'extérieur, en particulier destinée à être visible depuis l'extérieur de la pièce d'horlogerie. Nous utiliserons par la suite les adjectifs « intérieur » et « extérieur » tels que définis ci-dessus, même pour un composant horloger considéré indépendamment d'une pièce d'horlogerie, en référence avec son positionnement prévu au sein d'une pièce d'horlogerie.

D'autre part, nous utiliserons par convention l'adjectif horizontal pour toute direction positionnée dans un plan horizontal, en considérant la définition d'un plan horizontal par le plan du fond et/ou de la glace d'une pièce d'horlogerie, voire le plan tangent au fond et/ou à la glace dans le cas où ces éléments ne sont pas parfaitement plans. Ce plan horizontal correspond ainsi au plan d'une pièce d'horlogerie. L'adjectif « vertical » sera utilisé pour désigner une direction perpendiculaire à un plan horizontal. Ces deux adjectifs « horizontal » et « vertical » seront aussi utilisés pour un composant horloger considéré en dehors d'une pièce d'horlogerie, en référence avec son positionnement prédéterminé au sein d'une pièce d'horlogerie. La « hauteur » d'un composant sera considérée relativement à la direction verticale.

En complément, les adjectifs « inférieur » et « supérieur » seront utilisés en référence avec la direction verticale, le fond d'une pièce d'horlogerie se trouvant en position inférieure de la pièce, la glace se trouvant en position supérieure de ladite pièce. Ces deux adjectifs « inférieur » et « supérieur » seront aussi utilisés pour un composant horloger considéré en dehors d'une pièce d'horlogerie, en référence avec son positionnement prédéterminé au sein d'une pièce d'horlogerie.

En remarque, nous utiliserons l'expression « à base d'un matériau » pour désigner le fait de comprendre majoritairement ledit matériau, en particulier au moins 50% en poids dudit matériau. Dans tous les cas, lorsqu'un matériau particulier sera mentionné, il sera possible d'utiliser une réalisation alternative avec un matériau différent, à base dudit matériau particulier, ce qui ne sera pas rappelé explicitement. De plus, nous utiliserons parfois l'expression simplifiée « composant » pour désigner un composant horloger, voire abusivement une ébauche de composant horloger presque finalisée. L'invention sera particulièrement décrite dans le cadre d'un composant horloger d'habillage, mais elle pourra être implémentée pour tout autre composant horloger. Le composant peut ainsi se présenter sous la forme d'une carrure, comme cela sera décrit ci-après, mais peut aussi se présenter sous la forme d'une maille d'un bracelet, ou encore d'une platine ou d'un pont d'un mouvement d'horlogerie.

Le concept de l'invention consiste à proposer un composant horloger dont la structure ou une ébauche de la structure est de type « composite », comprenant l'association particulière d'un squelette rigide, ajouré, formant une structure de renfort, et présentant des ouvertures remplies par un second matériau.

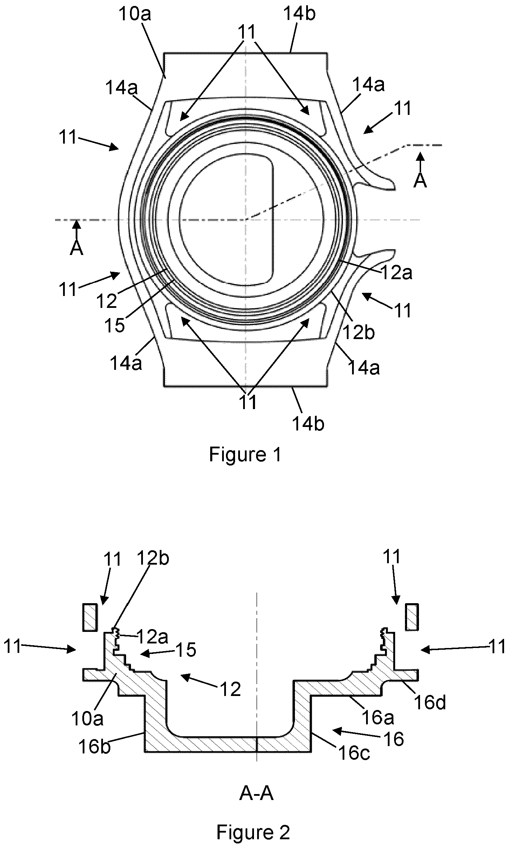

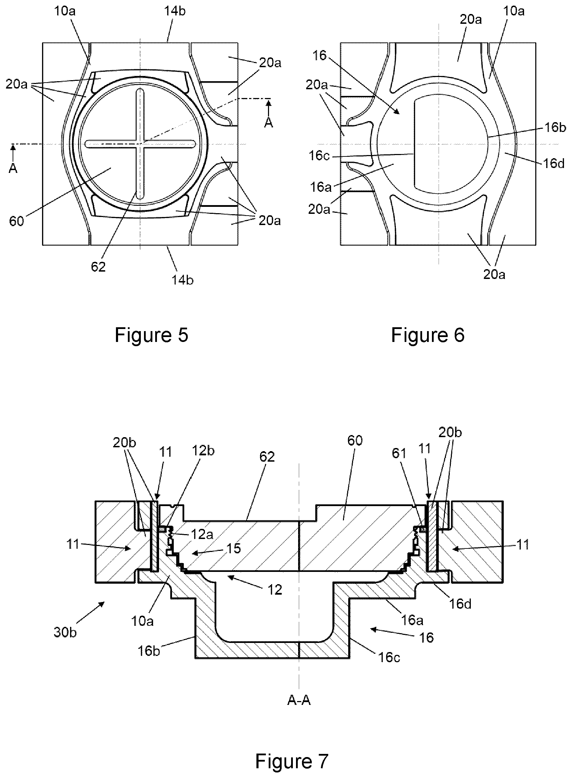

Les figures 1 à 12 illustrent un procédé de fabrication d'un composant horloger selon un mode de réalisation de l'invention, qui est une carrure 30, à titre d'exemple non limitatif. Le même procédé de fabrication pourra être mis en oeuvre pour fabriquer un autre composant horloger qu'une carrure, par exemple plus généralement tout composant horloger présentant une structure composite, comme un composant d'un bracelet, une lunette, un fond, voire un composant du mouvement tel qu'une ébauche ou une platine.

Une première étape du procédé de fabrication selon le mode de réalisation consiste en la fabrication d'un squelette ébauché 10a, comprenant des ouvertures débouchantes 11. Un tel squelette ébauché est ajouré, et est représenté sur les figures 1 à 3. Dans cette première étape, le squelette ébauché 10a peut être usiné par des moyens conventionnels, en particulier par enlèvement de copeaux. En variante, il peut être réalisé par impression 3D, par moulage ou par frittage, puis éventuellement repris par des moyens d'usinage, ce qui permet notamment d'atteindre une plus grande précision de fabrication et d'atteindre certaines géométries qu'il serait impossible ou très difficile à obtenir par des méthodes d'usinage conventionnelles par enlèvement de copeaux. Ce squelette est ébauché dans le sens où il ne présente pas encore sa forme finale, mais comprend certaines portions qui seront modifiées par la suite, afin d'atteindre la structure du squelette 10 finalisé.

Ce squelette peut présenter avantageusement une forme continue agencée autour d'un axe central vertical, adaptée à plusieurs composants horlogers comme la carrure qui est fabriquée dans ce mode de réalisation, délimitant un volume central ou enceinte 12, destinée à former le volume intérieur de la carrure qui doit notamment recevoir le mouvement horloger de la pièce d'horlogerie. Avantageusement, le squelette forme un ensemble monobloc, d'un seul tenant.

Ce squelette ébauché 10a peut comprendre, être à base de, ou être constitué d'un métal ou d'un alliage métallique, notamment comprenant de l'acier, de l'or, du platine, de l'argent, du bronze, du titane, comme du titane grade 5 ou de l'aluminure de titane, de l'aluminium, ou du magnésium. En variante, il peut comprendre, être à base de, ou être constitué de céramique technique, notamment à base d'alumine ou de zircone. En variante encore, il peut comprendre, ou être à base de, ou être constitué de composés organiques ou minéraux.

En remarque, les propriétés du matériau retenu pour former le squelette, telles que la température de fusion, et/ou la dureté, et/ou la ductilité, et/ou la limite élastique, et/ou la résistance à la rupture, sont compatibles avec le procédé qui sera décrits ci-dessous. Par exemple, ces propriétés peuvent être supérieures à celles des inserts qui seront décrits ci-dessous, afin de préserver l'intégrité du squelette lors d'une étape de moulage décrite par la suite.

Comme évoqué précédemment, le squelette comprend des ouvertures débouchantes. Ces ouvertures étant aptes à recevoir des inserts, comme cela sera précisé par la suite. De préférence, ces ouvertures sont débouchantes du côté extérieur du squelette ébauché. Ces ouvertures sont avantageusement traversantes ou ouvertes, c'est-à-dire que leurs deux extrémités débouchent, soit à l'extérieur du squelette, soit vers une autre ouverture du squelette. Autrement dit, les ouvertures sont débouchantes du fait qu'elles ne sont pas borgnes. Avantageusement encore, ces ouvertures, ou pores ou interstices, communiquent entre elles. Par exemple, le squelette ébauché peut présenter une structure en réseau ajouré régulier ou irrégulier, notamment de type en treillis, TPMS, alvéolaire, cellulaire, ou encore trabéculaire. Le réseau en treillis peut notamment comprendre des cloisons qui s'entrecroisent de manière aléatoire ou selon une périodicité bien définie. Cette structure peut comprendre la répétition d'un ou plusieurs éléments élémentaires juxtaposés, notamment en contact les uns des autres pour former une structure continue, ajourée. Avantageusement, les ouvertures débouchantes ne débouchent pas du côté intérieur de la carrure, afin de garantir une étanchéité parfaite au niveau de la surface délimitant l'enceinte 12 destinée à recevoir le mouvement horloger.

Dans ce mode de réalisation, afin de préserver l'intégrité du squelette ébauché 10a durant l'ensemble du procédé de fabrication, notamment lors de l'étape de moulage par compression qui sera décrite plus bas, le squelette ébauché 10a comprend des portions de renfort 14a, 14b permettant de rigidifier sa structure. Les portions de renfort peuvent se présenter comme des surépaisseurs, des piliers, des treillis ou toutes autres géométries permettant de rigidifier la structure. Elles peuvent être orientées de façon à reprendre les efforts du moulage, qui sera décrit par la suite. Elles peuvent être pérennes ou être supprimées lors d'une étape postérieure à l'étape de moulage du procédé, par exemple lors d'une étape de finition ou de reprise. À titre d'exemple, le squelette ébauché 10a représenté selon cet exemple de réalisation comprend des renforts qui se présentent notamment sous la forme de piliers 14b agencés aux entrecornes de la carrure 30, et de surépaisseurs 14a formées au niveau notamment des flancs de carrure.

Afin de pouvoir bénéficier de références précises pour les étapes postérieures, le squelette ébauché 10a est avantageusement repris par usinage conventionnel. Ainsi, des portions de reprise 16 sont formées par usinage avec une grande précision sur le squelette ébauché. Elles sont destinées à une fonction particulière pour l'étape de moulage et les étapes postérieures du procédé de fabrication, qui seront décrites par la suite, permettant notamment une orientation et un positionnement précis du squelette ébauché 10a lors de ces étapes. Il en résulte une grande précision dimensionnelle, exempte de défauts, notamment lors du moulage des inserts. Dans cette réalisation, les portions de reprise 16 se présentent sous la forme d'un appui 16a, d'un cylindre 16b, d'un méplat 16c, et d'un deuxième appui 16d, positionnés du côté supérieur de la carrure, c'est-à-dire le côté destiné à recevoir une glace, opposé au fond de la future pièce d'horlogerie.

Avantageusement, les portions de reprise 16 remplissent aussi une fonction de rigidification du squelette ébauché 10a. De préférence, elles peuvent fermer l'un des côtés de l'enceinte 12, qui devient ainsi une enceinte borgne. Ces portions de reprise sont destinées à être supprimées lors d'une étape de finition qui sera décrite par la suite.

D'autre part, le squelette comprend avantageusement des portions de finition 15, de même avantageusement usinées sur le squelette ébauché 10a pour présenter des côtes précises, voire des côtes terminées ou finales, dont la fonction est de former des références optimales pour les étapes postérieures au moulage, notamment lors de l'étape de finition qui sera décrite par la suite. Avantageusement, certaines portions de finition 15 forment de plus des portions fonctionnelles de la surface intérieure du squelette ébauché, au niveau du contour de l'enceinte 12, par exemple des surfaces destinées à l'emboîtage ou à l'encageage du mouvement horloger. En effet, une telle approche est avantageuse puisque ces portions fonctionnelles requièrent une grande précision dans leur structure.

Le procédé de fabrication selon le mode de réalisation comprend ensuite une deuxième étape consistant à fabriquer plusieurs inserts ébauchés 20b, destinés à être assemblés au squelette ébauché 10a mentionné ci-dessus. Le nombre d'inserts ébauchés peut être quelconque, comme au moins deux. Ces inserts sont ébauchés dans le sens où ils se présentent sous une forme provisoire, qui sera modifiée par le procédé de fabrication pour obtenir le composant horloger doté d'inserts 20.

Chaque insert ébauché 20b est destiné à être intégré au squelette ébauché 10a, par son positionnement dans une des ouvertures débouchantes 11 du squelette ébauché 10a. Pour cela, chaque insert ébauché 20b est fabriqué avec une grande précision, complémentaire de l'ouverture correspondante 11 du squelette ébauché 10a, dans laquelle il est destiné à prendre place. Ainsi, avantageusement, les inserts ébauché 20b ne sont pas injectés mais se présentent sous la forme d'éléments usinés ou préformés. Un tel usinage des inserts ébauchés 20b combine par exemple des moyens par enlèvement de copeaux et de découpage au jet d'eau ou de découpage laser.

D'autre part, chaque insert ébauché 20b peut être moulé et/ou usiné à partir d'un même bloc de matière, ce qui permet d'assurer une cohérence structurelle et/ou esthétique à l'ensemble, une fois les inserts 20 assemblés ou moulés au sein du squelette 10. Par cette approche, il est possible d'employer des matériaux hétérogènes en termes de composition, de structure et/ou d'esthétique, tout en maintenant une unité dans l'hétérogénéité des inserts 20 associés au squelette 10. Ainsi, le bloc de matière utilisé pourrait par exemple présenter des variations de structures et/ou de couleurs. En variante, l'ensemble des inserts ébauchés 20b agencés d'un même côté de la carrure sont usinés dans un même bloc de matière. Plusieurs blocs de matière distincts peuvent être utilisés.

Selon un mode de réalisation, les inserts ébauchés comprennent, ou sont à base de, ou sont constitués d'un matériau composite, comme un polymère tel qu'un thermoplastique, notamment un PEKK, un PEEK ou un PPS. Optionnellement, les inserts ébauchés comprennent une matrice en résine incorporant des fibres courtes ou longues, notamment des fibres de verre, de carbone, minérales ou organiques ou des poudres de céramique technique, notamment à base d'alumine ou de zircone, ou encore des pigments de matière luminescente. Ces fibres peuvent être orientées de sorte à favoriser la résistance mécanique dans des directions préférentielles et/ou de conserver la cohérence d'éventuels motifs de la matière composite une fois les inserts 20 assemblés au squelette 10. Par exemple, les fibres peuvent être orientées selon une direction longitudinale relativement aux flancs de la carrure. De plus, ces fibres peuvent notamment représenter un taux volumique d'environ 60%,

De plus, selon le mode de réalisation, les inserts ébauchés 20b sont dotés d'une surépaisseur ou d'un excédent de matière sur leur partie extérieure. L'excédent de matière pourra être mis à profit pour l'étape de moulage par compression, décrite par la suite. Avantageusement, l'excédent de matière peut être partagé ou mutualisé entre plusieurs inserts, de manière à n'avoir, par exemple, qu'un seul élément pour combler une multitude d'ouvertures débouchantes 11. Autrement dit, les inserts ébauchés 20b peuvent être indépendant les uns des autres ou reliés entre eux par un excédent de matière.

Dans la réalisation dans laquelle un excédent de matière est partagé ou mutualisé entre plusieurs inserts, cet excédent contribue également à conserver une cohérence structurelle et/ou esthétique parmi les différents inserts assemblés sur le squelette ébauché 10a, ce qui s'avère particulièrement avantageux pour des inserts ébauchés 20b fabriqués en matière composite, par exemple.

Dans la solution proposée, une partie ou l'ensemble des inserts ébauchés 20b situés sur chaque flanc de la carrure, est respectivement supporté par un unique élément, grâce à sa matière excédentaire.

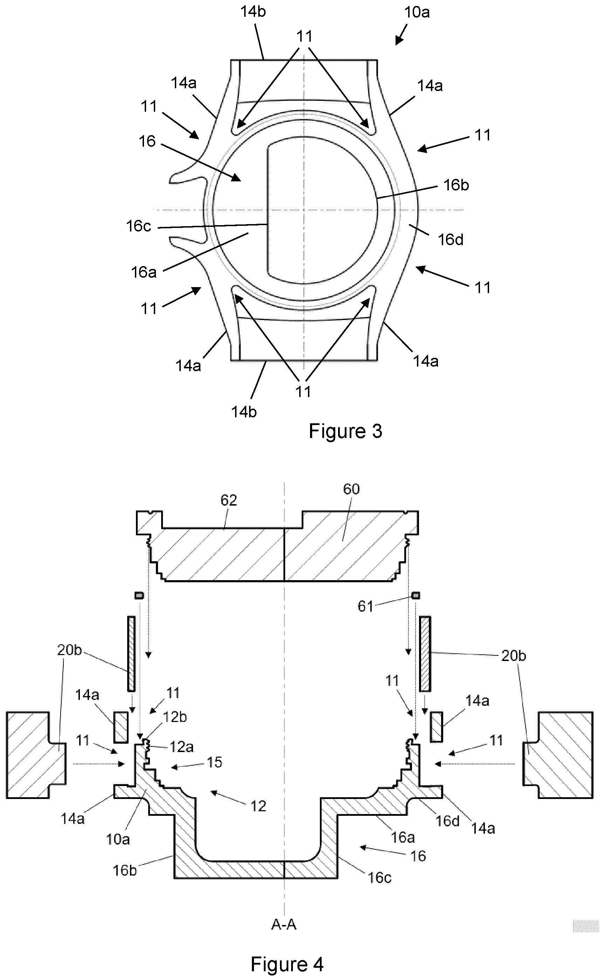

Le procédé de fabrication met ensuite en oeuvre une troisième étape dans laquelle les inserts ébauchés 20b sont assemblés au squelette ébauché 10a pour former un ensemble préassemblé 30b. Les figures 4 à 7 représentent un tel ensemble préassemblé 30b, qui est donc une carrure préassemblée 30b selon le mode de réalisation, formant un ensemble temporaire préparé pour la prochaine étape de moulage qui sera décrite ci-dessous. Du fait de la fabrication précise décrite précédemment, chaque insert ébauché 20b est moulé et/ou usiné avec une grande précision de manière à être assemblé et à s'ajuster à moindre jeu au sein de leur ouverture débouchante 11 respective.

De plus, selon ce mode de réalisation, un élément de protection 60 est assemblé au squelette ébauché 10a, de façon à boucher le côté ouvert de l'enceinte 12, c'est-à-dire le côté inférieur, opposé à celui fermé par une portion de reprise 16. Un tel élément de protection 60 permet d'obtenir une enceinte 12 interne complètement fermée et étanche, et de préserver l'intégrité des portions de la surface intérieure de l'ensemble préassemblé, notamment les portions de finition 15.

Naturellement, le squelette ébauché 10a, et l'ensemble préassemblé 30b, peuvent prendre plusieurs formes différentes sans sortir du cadre de l'invention. Notamment, l'enceinte 12, délimitée par cet ensemble préassemblé, peut présenter plusieurs ouvertures traversantes à travers l'ensemble préassemblé 30b, par exemple en vue d'intégrer des boutons de commande comme des poussoirs ou des couronnes sur la pièce d'horlogerie finale. Ainsi, de façon plus générale, dans le cas où l'enceinte 12 comprend des ouvertures traversantes en plusieurs endroits, plusieurs éléments de protection 60 peuvent être assemblés à l'ensemble préassemblé 30b, de façon à boucher et rendre étanche l'enceinte 12, en fermant toutes ces ouvertures traversantes.

Dans cette opération, un élément de protection 60 peut être assemblé de façon amovible au squelette ébauché 10a. De façon complémentaire, afin de garantir une étanchéité optimale, un joint 61, notamment réalisé dans un matériau cuivreux, peut être placé à l'interface d'un élément de protection 60 et du squelette ébauché 10a. Une fois assemblé, l'élément de protection 60 peut avantageusement contribuer à rigidifier encore plus le squelette ébauché 10a pour supporter les pressions générées lors de l'étape moulage.

Selon un mode de réalisation, un élément de protection 60 peut prendre la forme d'un bouchon qui se présente dans un matériau cuivreux, plus particulièrement en laiton. Il peut être assemblé par tout moyen. Par exemple, il peut être vissé dans un taraudage 12a du squelette ébauché 10a, par exemple un taraudage prévu pour la fixation d'un fond 40 de la future pièce d'horlogerie. Au niveau d'un tel taraudage 12a, un logement 12b peut donc être prévu pour loger un joint d'étanchéité 61. Un bouchon peut comprendre une empreinte 62 permettant de le visser et de le dévisser aisément du squelette ébauché 10a avec un outil adapté.

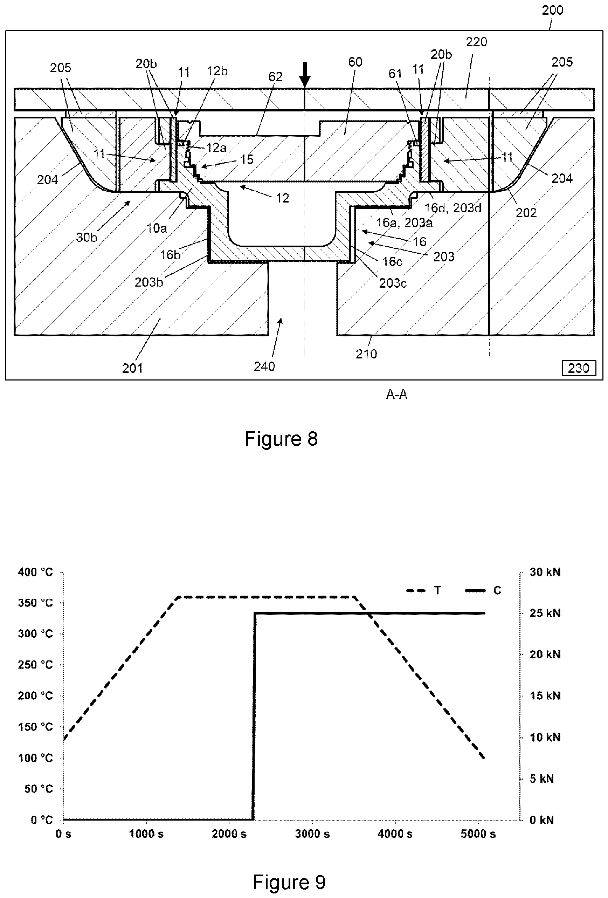

Le procédé de fabrication comprend ensuite une quatrième étape de moulage de l'ensemble préassemblé 30b au sein d'un moule, pour obtenir un ensemble préassemblé moulé, c'est-à-dire une carrure moulée dans ce cas. Une telle étape entraîne le soudage des au moins deux inserts ébauchés 20b entre eux, et le positionnement final des inserts de sorte à former une structure imbriquée et indissociable avec le squelette. Cette étape permet donc de solidariser les inserts ébauchés 20b au squelette ébauché 10a. Les figures 8 et 9 illustrent la mise en oeuvre de cette quatrième étape. En remarque, par « positionnement final », nous entendons notamment un positionnement qui vise notamment à supprimer les jeux entre les inserts et les ouvertures débouchantes 11 du squelette. Le « soudage » susmentionné entre au moins deux inserts ébauchés 20b assure finalement la continuité de la matière à assembler ; il est notamment obtenu grâce à un échauffement et une fusion au moins locale de la matière. Autrement dit, ce procédé d'assemblage permet de solidariser ou de fusionner les composants entre eux.

Dans cette étape, la carrure préassemblée 30b est disposée dans un moule 201 d'un dispositif de moulage 200 par compression, entre une plaque d'appui 210 et une plaque de pression 220. À cet effet, le moule 201 présente une cavité 202 destinée à accueillir la carrure préassemblée 30b. Cette cavité peut être agencée au sein de la plaque d'appui 210 et/ou de la plaque de pression 220 du dispositif de moulage 200 par compression.

Avantageusement, le moule 201 comprend des références 203 complémentaires aux portions de reprise 16 du squelette ébauché 10a, de sorte à permettre un positionnement précis et bien orienté du squelette ébauché 10a et donc de l'ensemble préassemblé 30b, c'est-à-dire la carrure préassemblée. Plus particulièrement, le moule 201 comprend des références 203a, 203b, 203c, 203d respectivement complémentaires aux portions de reprise 16a, 16b, 16c, 16d du squelette ébauché 10a.

Le moule 201 est de plus avantageusement conçu de façon à guider ou à favoriser le fluage des inserts ébauchés 20b dans le sens de leur insertion dans leur ouverture débouchante 11 lors de l'étape de moulage. Pour ce faire, le moule 201 peut comprendre des surfaces inclinées 204 permettant de rediriger l'orientation de l'effort fourni par la plaque de pression 220 vers le sens d'insertion des inserts ébauchés 20b.

Avantageusement encore, le moule 201 comprend des angles de dépouilles permettant de démouler facilement la carrure. De plus, le moule 201 peut comprendre des éjecteurs ou du moins des ouvertures 240 destinées à les accueillir, de sorte à faciliter l'éjection de la carrure du moule 201. Le moule 201 peut enfin comprendre des canaux de débordement (« flash groove ») ou des évents. Les canaux de débordement permettent d'éjecter l'excès de matière (« flash ») et/ou permettent l'évacuation de l'air ou des gaz emprisonnés. Les ouvertures 240 susmentionnées peuvent aussi être mises à profit pour l'évacuation de l'air ou des gaz.

En complément, des éléments de remplissage 205 peuvent être assemblés dans le moule 201 de manière à combler les vides entre la paroi de la cavité 202 du moule et l'ensemble préassemblé 30b. De tels éléments de remplissage 205 peuvent aussi contribuer à guider le fluage des inserts ébauchés 20b en direction de leur cavité 11. Ils peuvent également être mis à profit comme réserve de matière pour l'étape de moulage par compression. De préférence, ces éléments de remplissage 205 sont dans le même matériau que celui des inserts ébauchés 20b. De préférence encore, les éléments de remplissage 205 sont usinés à partir du même bloc de matière que celui des inserts ébauchés 20b. Alternativement, les éléments de remplissage 205 pourraient être faits dans un matériau métallique, et conçus de façon à se déplacer à l'encontre des inserts ébauchés 20b lors de la mise en pression du moule.

Alternativement encore, les vides entre la paroi de la cavité 202 du moule 201 et l'ensemble préassemblé 30b peuvent aussi être comblés par de la matière amenée par un dispositif de moulage par injection qui permet, par la même occasion, de mettre en pression le moule de façon à solidariser les inserts ébauchés 20b au squelette ébauché 10a. De cette façon, c'est la pression fournie par l'injection de la matière qui permet de comprimer les inserts ébauchés contre le squelette ébauché, et non le déplacement de la plaque de pression 220. Bien entendu, le moule doit être adapté de façon à permettre une telle mise en oeuvre. De préférence, la matière injectée est la même nature que celle des inserts ébauchés.

Selon le mode de réalisation représenté, l'ensemble préassemblé 30b est agencé dans le moule 201 avec le côté supérieur orienté vers un fond 203d de la cavité 202. Le moule 201 est conçu de façon qu'une portion de reprise 16d du squelette ébauché 10a soit plaquée contre ce fond 203d de la cavité du moule, par la pression exercée lors du moulage, de sorte à créer une interface étanche qui permet d'empêcher le fluage des inserts ébauchés 20b sur les différentes portions de reprise 16 et/ou de finition 15. D'une manière générale, la coopération du moule 201 avec l'ensemble préassemblé 30b, et plus précisément avec le squelette ébauché 10a, est conçue de façon à empêcher que le fluage des inserts 20b vienne polluer les portions de reprise 16 lors de l'étape de moulage.

Les surfaces inclinées 204 formant la paroi supérieure de la cavité 202 du moule comprennent de plus un angle de dépouille de 30° relativement à la direction d'insertion de l'ensemble préassemblé 30b et à la direction de déplacement de la plaque de pression 220. Les angles de dépouille de ces surfaces inclinées 204 sont également mis à profit pour réorienter l'effort de la plaque de pression 220 dans le sens d'insertion des inserts ébauchés 20b au sein des ouvertures débouchantes 11, comme expliqué précédemment. Autrement dit, l'effort de la plaque de pression 220 est réorienté dans une direction sensiblement perpendiculaire à la direction de déplacement de la plaque de pression 220.

Des éléments de remplissage 205 sont disposés en périphérie de la carrure préassemblée, sur un plan perpendiculaire à la direction de déplacement de la plaque de pression 220.

De préférence, le dispositif de moulage 200 par compression est doté d'au moins un système de chauffage et de refroidissement 230. L'apport de chaleur permet de faire fondre les inserts ébauchés 20b afin de permettre leur fluage lors de l'étape de moulage et de compression. De préférence, le système est asservi de sorte à permettre la régulation de la température lors de la mise en pression, mais aussi lors du chauffage et du refroidissement du moule 201. Cela permet notamment une meilleure maîtrise du fluage et de la solidarisation des inserts, ainsi que du remplissage des ouvertures débouchantes du squelette ébauché 10a.

La figure 9 illustre plus précisément les sous-étapes possibles de la quatrième étape de moulage de l'ensemble préassemblé, dans le cas d'inserts en thermoplastique de type PEKK, renforcés par des fibres de carbone, et un squelette ébauché 10a en titane grade 5 ou en aluminure de titane. Ces sous-étapes peuvent être les suivantes :
a. Montée en température du moule 201 jusqu'à atteindre une température T de consigne, par exemple de 360°C, selon une rampe prédéfinie, par exemple de 10°C/min.
b. Maintien de la température du moule 201 à la température T de consigne pendant une durée déterminée, par exemple de 900 secondes, de manière à assurer l'homogénéité de la température du moule et de la carrure préassemblée 30b.
c. Mise en pression du moule 201 avec une charge C définie, par exemple de 25 kN, maintenue de préférence jusqu'à la fin de la sous-étape de refroidissement ci-dessous.
d. Refroidissement du moule 201 jusqu'à atteindre une température T de consigne, par exemple de 130°C, selon une rampe définie, par exemple de 10°C/min.
Ensuite, cette quatrième étape comprend les sous-étapes suivantes :
e. Démoulage de la carrure moulée 30a.
f. Refroidissement de la carrure moulée 30a à la température ambiante.

Selon l'exemple de réalisation, le matériau des inserts est un thermoplastique PEKK qui permet de bénéficier avantageusement d'une haute température de fusion, supérieure à 270°C, voire supérieure à 300°C, voire pouvant atteindre 360°C. Ainsi, il est obtenu un fluage optimal du matériau des inserts lors du procédé ; la température de consigne pour l'étape de moulage est de préférence égale voire inférieure de 10°C ou de 20°C voire de 30°C à la température de fusion dudit matériau. Avantageusement, le matériau est chargé de fibres de carbone, dites longues, et orientées selon une direction longitudinale relativement aux flancs de la carrure.

Avantageusement, chaque ouverture débouchante 11 du squelette ébauché 10a est destinée à recevoir un insert ébauché 20b. Du fait des fabrications selon les premières étapes décrites précédemment, ces inserts ébauchés 20b sont insérés dans les ouvertures à moindre jeu. L'étape de moulage décrite précédemment permet le fluage du matériau des inserts. Comme ces ouvertures sont débouchantes et communiquent entre elles, lors de ce fluage, le matériau d'au moins deux inserts vient en contact, ce qui permet le soudage entre eux de ces inserts ébauchés 20b au sein du squelette ébauché 10a. Autrement dit, deux ouvertures débouchantes 11, comprenant respectivement au moins deux inserts ébauchés 20b, sont des ouvertures non borgnes, dont les extrémités respectives communiquent entre elles, permettant la solidarisation des deux inserts ébauchés 20b respectifs.

Plus généralement, le moulage par compression permet de faire fondre, ou au moins de rendre malléable, du moins superficiellement ou localement, les inserts ébauchés 20b, de sorte à les solidariser ou à les souder entre eux sur le squelette ébauché 10a. Dans cette étape, l'ensemble préassemblé est chauffé puis mis sous pression. En fluant, les inserts vont également combler les jeux et adhérer au squelette ébauché 10a.

En remarque, la solidarisation ou le soudage peut être réalisé par une fusion superficielle ou locale, au moins à l'interface en contact des au moins deux inserts ébauchés 20b. La solidarisation ou le soudage peut aussi être réalisé par une fusion totale ou sensiblement totale de ces derniers. « Par « solidarisation », nous entendons une fixation à demeure, un assemblage définitif, indissociable et irréversible, entre au moins deux composants. La solidarisation est réalisée sans nécessiter de composant annexe et sans apport d'un quelconque matériau tel que de la colle ou d'un matériau de brasage.

Il résulte de cette solidarisation ou de ce soudage des inserts ébauchés 20b fusionnés entre eux au sein des ouvertures débouchantes 11 un ensemble robuste, imbriqué, indémontable ou indissociable, qui est particulièrement résistant aux contraintes environnementales et aux différents chocs accidentels que pourra subir la future pièce horlogère lors du porter.

D'autre part, les différentes ouvertures débouchantes 11 du squelette ébauché 10a débouchent donc avantageusement vers l'extérieur du squelette ébauché 10a, et, les unes dans les autres. De plus, avantageusement encore, afin de garantir un emboîtage avec une étanchéité parfaite, les ouvertures débouchantes 11 du squelette ébauché 10a ne débouchent pas dans l'enceinte 12 du squelette ébauché 10a. Ainsi, le matériau des inserts ne peut pas fluer dans l'enceinte 12 au travers la structure ajourée du squelette ébauché 10a.

En remarque, dans ce mode de réalisation, un ou plusieurs éléments de protection 60 sont avantageusement assemblés au squelette ébauché 10a, comme décrit précédemment, de façon à rendre étanche l'enceinte 12 de l'ensemble préassemblé, ce qui permet d'éviter que le fluage des inserts ébauchés 20b puisse venir polluer les portions de finitions 15 et les portions de reprise 16.

Selon une variante de réalisation, le moule 201 peut être adapté de façon à permettre le moulage simultané de plusieurs composants horlogers.

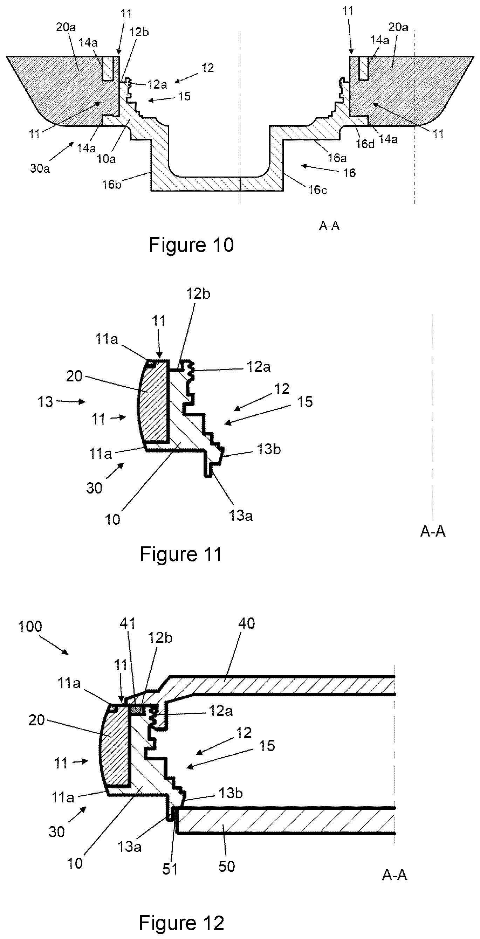

Le procédé de fabrication comprend ensuite une cinquième étape de finition, après démoulage de l'ensemble préassemblé, formant un ensemble moulé 30a, comprenant un squelette ébauché 10a et des inserts moulés 20a, qui permet d'atteindre les dimensions et terminaisons finales du composant horloger, c'est-à-dire la carrure dans cet exemple de réalisation. Dans cette étape, les portions de reprise 16 sont modifiées ou supprimées, alors que les portions de finition 15 restent inchangées. Cette étape est illustrée par les figures 10 et 11.

Dans cette étape, la forme de la carrure peut être reprise par des moyens d'usinage conventionnel, tels que par enlèvement de copeaux. Par l'utilisation de portions de reprise 16 prédéfinies, les surépaisseurs et les excédents de matière, présents notamment au niveau des flancs et de la partie inférieure de la carrure, sont supprimés avec une précision optimale. Dans cette étape, les portions de finition 15 sont utilisées pour un usinage précis des portions de reprise 16. Selon le mode de réalisation, les portions de finition 15 sont mises à profit pour supprimer des portions de reprise 16 par l'usinage d'une cheminée 13a et d'un rehaut 13b, destiné notamment à la fixation d'une glace 50 à l'aide d'un joint 51, comme représenté par la figure 12 qui représente le composant horloger finalisé.

Étant donné que les portions de reprise 16 et les portions de finition 15 ont été anticipées et épargnées pendant l'étape de moulage, leur intégrité a été préservée, ce qui garantit une reprise de l'ensemble moulé 30a avec une précision optimale, non prétéritée par de potentielles imprécisions géométriques qui seraient issues de l'étape de moulage. Cette précision est intéressante pour notamment assurer des épaisseurs des portions de protection 11a, qui seront précisés par la suite, homogènes autour des inserts 20 de la carrure 30 composite finalisée.

Plus précisément, les portions de reprise 16 permettent notamment de reprendre l'ensemble moulé 30a en supprimant les excédents de matière provenant des inserts moulés 20a et de certaines portions de renfort 14a, 14b. Avantageusement, les portions de reprise 16 permettent un positionnement et une orientation optimale de la carrure moulée 30a lors de cette étape de finition.

Les portions de finition 15 permettent ensuite de supprimer les portions de reprise 16, tout en usinant des portions fonctionnelles 13a, 13b de la carrure, ces portions fonctionnelles permettant entre autres l'assemblage d'une glace 50 sur la carrure selon cet exemple de réalisation. L'enceinte 12 devient alors également débouchante en partie supérieure, en complément de la partie inférieure, après le retrait du ou des éléments de protection 60.

La reprise réalisée dans la première étape permet d'usiner une partie ou la totalité de l'enceinte 12 de la carrure destinée à l'encageage d'un mouvement. Dans cette réalisation, elle comprend un usinage depuis la face inférieure destinée à comprendre un fond 40. Un taraudage 12a et un logement 12b pour réceptionner un joint d'étanchéité ont notamment été usinés pour permettre la fixation étanche d'un fond 40 vissé.

L'invention porte aussi sur un composant horloger en tant que tel résultant du procédé de fabrication décrit précédemment, et particulièrement sur une carrure de pièce d'horlogerie. La figure 12 illustre ainsi une carrure 30 selon un mode de réalisation de l'invention.

De manière générale, la carrure de pièce d'horlogerie selon le mode de réalisation comprend un squelette 10 formant une structure de renfort de la carrure, ledit squelette comprenant des ouvertures débouchantes et délimitant une enceinte 12 centrale et ledit squelette 10 formant au moins un dispositif de fixation 12a, 13a, 13b pour un fond 40 et/ou une glace 50 et/ou une lunette et/ou un organe de commande et/ou un bracelet. La carrure comprend de plus au moins deux inserts 20 soudés entre eux pour former au moins un ensemble continu à travers au moins deux ouvertures débouchantes du squelette, pour former au moins une structure imbriquée comprenant lesdits au moins deux inserts 20 et ledit squelette 10, au moins un desdits deux inserts 20 formant au moins une partie de la surface extérieure de la carrure 30.

La carrure présente une forme globalement annulaire traditionnelle, qui définit un volume central ou enceinte 12, destinée au logement d'un mouvement horloger. Le squelette 10 délimite particulièrement cette enceinte 12, et est conçu de façon à permettre un encageage ou un emboîtage précis d'un mouvement horloger. Autrement dit, l'enceinte 12 du squelette 10 est fabriquée de façon à permettre une fixation et un ajustement précis du mouvement en son sein. Le squelette 10 peut comprendre une surface de réception d'un tel mouvement, à l'interface avec l'enceinte 12.

L'enceinte 12 est également conçue de sorte à offrir un emboîtage permettant une étanchéité optimale. Pour ce faire, le squelette 10 délimitent des logements 12b, 13a pour des joints d'étanchéité 41, 51, au niveau des interfaces entre les composants d'une boîte de montre 100, comme une glace, un fond, ou une boîte de pièce d'horlogerie, et le squelette 10. Chaque logement 12b, 13a peut être usiné sur le squelette 10 et/ou sur un composant adjacent de la boîte, associé au squelette.

Selon l'exemple de réalisation de la figure 12, un fond 40 est vissé sur un taraudage 12a du squelette 10, et un joint d'étanchéité 41 est placé dans un logement 12b disposé à l'interface entre le fond 40 et le squelette 10. De plus, une glace 50 est chassée sur une cheminée 13a du squelette 10, et un joint 51 est de même placé à l'interface entre la glace 50 et le squelette 10. Cette réalisation permet de former une enceinte 12 étanche, destinée à réceptionner un mouvement. De préférence, les joints sont logés dans des logements du squelette 10 afin de bénéficier d'états de surface qualitatifs et de garantir ainsi une étanchéité optimale.

Le squelette 10 de la carrure 30 forme une partie de la surface extérieure de la carrure, notamment localisée au niveau d'arêtes ou de chanfreins disposés au niveau de flancs de la carrure, des cornes, et d'un rehaut. Tout ou partie des surfaces extérieures de la carrure, notamment les surfaces visibles, peut être terminé avec des finitions de haute qualité, en adéquation avec les finitions retenues pour le reste de la carrure telles que notamment le polissage ou le satinage.

Le squelette comprend avantageusement au moins une arête de protection positionnée au niveau d'un bord extérieur visible d'un insert. En effet, avantageusement, des portions de protection 11a sont agencées sur lesdites surfaces extérieures et sont mises à profit pour protéger les inserts 20 de l'environnement extérieur, notamment des chocs ou des frottements, qui pourraient ébrécher ou altérer la surface ou les bords extérieurs des inserts 20, qui se présentent dans un matériau moins dur que celui du squelette 10. Ces portions de protection 11a forment des zones renforcées aux endroits fortement sollicités ou exposés. Il est de ce fait avantageux de concevoir un squelette dans un matériau présentant notamment une meilleure limite élastique, une dureté plus élevée ou une meilleure ductilité que celles des inserts. Les portions de protection 11a peuvent se présenter sous la forme de surfaces, d'arêtes ou de chanfreins entourant totalement ou partiellement les bords visibles des inserts 20.

Avantageusement, le squelette comprend des ouvertures débouchantes 11 qui sont toutes remplies par des inserts, chaque insert étant soudé ou fusionné avec au moins un autre insert, et éventuellement au squelette, pour former au moins un ensemble continu du matériau des inserts au sein du squelette, et former au moins une structure imbriquée indissociable comprenant lesdits inserts 20 et ledit squelette 10.

L'invention porte aussi sur une pièce d'horlogerie qui comprend une carrure 30 telle que décrite précédemment. La pièce d'horlogerie peut comprendre une glace 50 fixée sur le squelette 10 de la carrure 30 et/ou un fond 40 fixé sur le squelette 10 de la carrure 30 et/ou une lunette fixée sur le squelette de la carrure et/ou un organe de commande, comme un poussoir ou une couronne, fixé sur le squelette de la carrure, et/ou un bracelet fixé sur le squelette de la carrure.

Finalement, la solution proposée par l'invention présente les avantages suivants :
- elle permet de diminuer significativement la masse d'une carrure, et donc d'une boîte de montre, tout en permettant d'atteindre une résistance mécanique très importante. Les parties les plus fragiles formées par les inserts peuvent être protégées par le squelette ;
- Dans le cas d'une carrure, elle permet un emboîtage d'un mouvement horloger avec un ajustement de grande précision, et offre une protection optimale de celui-ci contre les éléments de l'environnement extérieur tels que la poussière, l'humidité, l'immersion dans l'eau et les chocs ;
- Le choix des matériaux permet de répondre aux exigences mécaniques, tout en offrant une multitude de possibilités esthétiques ;
- Le squelette peut présenter une structure ajourée complexe, le procédé garantit la présence des inserts au sein d'une géométrie complexe et en profondeur ;
- Le composant horloger, notamment la carrure, peut atteindre une forme finale très précise.

En synthèse, l'invention permet donc de combiner deux objectifs majeurs pour un composant, notamment un composant horloger d'habillage, qui n'étaient pas atteints jusqu'ici. Elle permet d'obtenir à la fois un composant léger et un composant mécaniquement robuste, tout en étant esthétiquement attrayant.

Naturellement, l'invention ne se limite pas à la géométrie spécifique du squelette tel que décrit précédemment. Des méthodes de conception avancées telles que la simulation numérique et l'optimisation topologique (assistée ou non par un modèle d'intelligence artificielle et/ou par un modèle de machine learning) peuvent être avantageusement mises à profit pour la définition et le dimensionnement du squelette 10. Ces méthodes permettent de distribuer le matériau du squelette uniquement où celui-ci est nécessaire pour remplir les fonctions attendues, notamment pour supporter les contraintes mécaniques, ce qui permet de réduire considérablement la masse totale du composant sans compromettre sa résistance mécanique.

De plus, ce concept d'architecture composite en deux parties pourrait n'être implémenté que partiellement dans le volume du composant horloger, c'est-à-dire pas nécessaire dans tout le volume.

L'invention est particulièrement adaptée à tout composant, en particulier à tout composant horloger, notamment à tout composant d'habillage, comme cela a été rappelé précédemment.

## Revendications

1. Procédé de fabrication d'un composant horloger, **caractérisé en ce qu'**il comprend les étapes suivantes :
- Fabrication d'un squelette ébauché (10a) comprenant des ouvertures débouchantes (11) ;
- Fabrication d'au moins deux inserts ébauchés (20b) ;
- Formation d'un ensemble préassemblé (30b) par insertion à moindre jeu de chaque insert ébauché (20b) dans une ouverture débouchante (11) du squelette ébauché (10a) ;
- Moulage de l'ensemble préassemblé (30b) au sein d'un moule (201), entraînant le soudage de chaque insert ébauché (20b) avec au moins un autre insert ébauché (20b), de sorte à former une structure imbriquée et indissociable avec le squelette (10) ;
- Usinage de finition permettant d'atteindre les dimensions et terminaisons finales du composant horloger.

2. Procédé de fabrication d'un composant horloger selon la revendication précédente, **caractérisé en ce que** l'étape de fabrication d'un squelette ébauché (10a) forme des portions de reprise (16) et des portions de finition (15), et **en ce que** l'étape d'usinage de finition laisse les portions de finition (15) inchangées et modifie ou supprime les portions de reprise (16).

3. Procédé de fabrication d'un composant horloger selon la revendication précédente, **caractérisé en ce que** le moule (201) comprend des portions formant des éléments de référence (203) complémentaires aux portions de reprise (16) du squelette ébauché (10a), de sorte à positionner et orienter le squelette ébauché (10a) de l'ensemble préassemblé (30b) au fond du moule (201) en créant des interfaces étanches permettant d'empêcher que le matériau des inserts ébauchés (20b) vienne recouvrir les portions de reprise (16) du squelette ébauché (10a).

4. Procédé de fabrication d'un composant horloger selon l'une des revendications précédentes, **caractérisé en ce qu'**il comprend une étape d'assemblage d'au moins un élément de protection (60) sur le squelette ébauché (10a) de l'ensemble préassemblé (30b) avant la mise en oeuvre de l'étape de moulage de l'ensemble préassemblé, pour protéger tout ou partie de l'ensemble préassemblé, notamment des portions de reprise (16) du squelette ébauché (10a) et/ou des ouvertures du squelette et/ou des portions de finition (15), notamment des ouvertures du squelette conçues au niveau de trous de passage pour des commandes comme des poussoirs ou une couronne de remontoir, et/ou **en ce qu'**il comprend une étape d'assemblage d'au moins un élément de protection (60) sur le squelette ébauché (10a) de l'ensemble préassemblé (30b) avant la mise en oeuvre de l'étape de moulage de l'ensemble préassemblé, pour rigidifier le squelette ébauché (10a) et préserver son intégrité lors de l'étape de moulage.

5. Procédé de fabrication d'un composant horloger selon la revendication précédente, **caractérisé en ce que** le squelette ébauché (10a) délimite une enceinte (12) interne, et **en ce qu'**un élément de protection (60) est avantageusement assemblé au squelette ébauché (10a) de façon à fermer de manière étanche une face ouverte de ladite enceinte (12) interne.

6. Procédé de fabrication d'un composant horloger selon l'une des revendications précédentes, **caractérisé en ce que** l'étape de moulage de l'ensemble préassemblé (30b) comprend une étape de chauffage de sorte à faire fluer les inserts ébauchés (20b) et une étape de compression, pour assurer un remplissage des ouvertures débouchantes (11) du squelette par le matériau des inserts ébauchés, ainsi que le soudage entre des inserts ébauchés (20b) et optionnellement leur adhésion au squelette, l'étape de chauffage étant optionnellement une étape de chauffage asservi.

7. Procédé de fabrication d'un composant horloger selon l'une des revendications précédentes, **caractérisé en ce que** l'étape de fabrication d'un squelette ébauché (10a) est mise en oeuvre par usinage ou par impression tridimensionnelle ou par moulage ou par frittage, avec une reprise optionnelle par des moyens d'usinage pour atteindre la précision finale d'au moins des portions de finition (15) du squelette ébauché (10a).

8. Procédé de fabrication d'un composant horloger selon l'une des revendications précédentes, **caractérisé en ce que** l'étape de fabrication d'un squelette ébauché (10a) forme un squelette ébauché (10a) comprenant des ouvertures débouchantes (11) débouchant du côté extérieur du squelette ébauché (10a) et communicantes entre elles, et optionnellement ne débouchant pas du côté intérieur au niveau d'une enceinte (12) du squelette ébauché (10a).

9. Procédé de fabrication d'un composant horloger selon l'une des revendications précédentes, **caractérisé en ce qu'**il fabrique un squelette (10) comprenant des logements (12b, 13a) pour positionner des joints d'étanchéité au niveau des interfaces avec d'autres composants comme une glace, un fond, ou un élément de protection.

10. Procédé de fabrication d'un composant horloger selon l'une des revendications précédentes, **caractérisé en ce que** la fabrication des inserts ébauchés (20b) comprend un usinage ou un moulage à partir d'un même bloc dans un matériau doté d'un point de fusion inférieur à celui du matériau du squelette ébauché (10a).

11. Procédé de fabrication d'un composant horloger selon l'une des revendications précédentes, **caractérisé en ce que** la fabrication des inserts ébauchés (20b) comprend la formation d'une surépaisseur ou d'un excédent de matière sur leur partie extérieure, lesdits inserts ébauchés (20b) étant indépendants les uns des autres ou reliés entre eux par ledit excédent de matière.

12. Procédé de fabrication d'un composant horloger selon l'une des revendications précédentes, **caractérisé en ce que** le composant horloger est une carrure (30), est un composant d'un bracelet, est une lunette, un fond, un cadran, ou un composant du mouvement horloger, comme une ébauche ou une platine.

13. Procédé de fabrication d'un composant horloger selon l'une des revendications 1 à 11, **caractérisé en ce que** le composant horloger est une carrure (30), **en ce que** le squelette ébauché (10a) délimite une enceinte (12) interne destinée à recevoir un mouvement horloger, et comprend au moins une portion formant au moins un dispositif de fixation (12) pour un fond et/ou une glace et/ou une lunette et/ou un organe de commande et/ou un bracelet.

14. Procédé de fabrication d'un composant horloger selon la revendication précédente, **caractérisé en ce que** les portions de reprise (16) comprennent une surface d'appui, un cylindre, et un méplat, positionnés du côté supérieur, à l'extérieur de l'enceinte (12) interne de la carrure, et **en ce qu'**il comprend une étape de finition comprenant la suppression des portions de reprise (16) par usinage d'une cheminée et d'un rehaut, en formant un dispositif de fixation d'une glace.
